# DEMANDE DE BREVET EUROPEEN

(11) **EP 3 970 833 A1**
(43) Date de publication de la demande: **23.03.2022**
(21) Numéro de dépôt: 21193734.7
(22) Date de dépôt: 30.08.2021
(51) Int. Cl.: B01D 53/22

(54) **COMMANDE D'UNE INSTALLATION DE TRAITEMENT PAR PERMÉATION MEMBRANAIRE**

(30) Priorité: 18.09.2020 FR 2009486
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: VALENTIN, Solène, 38360 Sassenage (FR); BARRAUD, François, 38360 Sassenage (FR)
(74) Mandataire: Air Liquide

(57) **Abrégé**

Installation pour le traitement par perméation membranaire d'un flux gazeux d'alimentation comprenant au moins du méthane et du dioxyde de carbone, ladite installation comprenant au moins trois unités de séparation membranaire, un moyen d'ajustement de la pression du flux gazeux d'alimentation en fonction de la concentration en méthane mesurée dans le deuxième rétentat et un moyen d'ajustement de la pression du premier perméat en fonction de la concentration en méthane dans le troisième perméat.

## Description

La présente invention est relative à une installation de traitement par perméation membranaire d'un courant gazeux contenant au moins du méthane et du dioxyde de carbone pour produire un courant gazeux riche en méthane - dont la teneur en méthane est conforme aux besoins de son utilisation et à un procédé de commande d'une telle installation.

Elle concerne en particulier l'épuration de biogaz, dans le but de produire du biométhane conforme aux spécifications pour injection dans un réseau de gaz naturel.

Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.

De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles.

Le biogaz contient majoritairement du méthane (CH4) et du dioxyde de carbone (CO2) dans des proportions variables en fonction du mode d'obtention mais également, en moindres proportions de l'eau, de l'azote, de l'hydrogène sulfuré, de l'oxygène, ainsi que des composés organiques autres, à l'état de traces.

Selon les matières organiques dégradées et les techniques utilisées, les proportions des composants diffèrent, mais en moyenne le biogaz comporte, sur gaz sec, de 30 à 75% de méthane, de 15 à 60% de CO2, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au coeur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (GNL)...

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs oeuvrant sur un territoire (agriculteurs, industriels, pouvoirs publics), la production de biométhane aide les territoires à acquérir une plus grande autonomie énergétique.

Plusieurs étapes doivent être franchies entre la collecte du biogaz et l'obtention du biométhane, produit final apte à être comprimé ou liquéfié.

En particulier, plusieurs étapes sont nécessaires avant le traitement qui vise à séparer le dioxyde de carbone pour produire un courant de méthane purifié. Une première étape consiste à comprimer le biogaz qui a été produit et acheminé à pression atmosphérique, cette compression peut être obtenue - de façon classique - via un compresseur. Les étapes suivantes visent à débarrasser le biogaz des composants corrosifs que sont le sulfure d'hydrogène et les composés organiques volatils (COV), les technologies utilisées sont de façon classique l'adsorption à pression modulée (PSA) et le piégeage sur charbon actif. Vient ensuite l'étape qui consiste à séparer le dioxyde de carbone pour disposer in fine de méthane à la pureté requise pour son usage ultérieur.

Le dioxyde de carbone est un contaminant typiquement présent dans le gaz naturel dont il est courant de devoir le débarrasser. Des technologies variées sont utilisées pour cela en fonction des situations ; parmi celles-ci, la technologie membranaire est particulièrement performante lorsque la teneur en CO2 est élevée ; elle est donc pour séparer le CO2 présent dans le biogaz, provenant des gaz de décharge ou des digesteurs de déchets végétaux ou animaux.

Les procédés membranaires de séparation de gaz utilisés pour la purification d'un gaz, qu'ils utilisent un ou plusieurs étages de membranes doivent permettre la production d'un gaz à la qualité requise, pour un faible coût, tout en minimisant les pertes du gaz que l'on souhaite valoriser. Ainsi, dans le cas de l'épuration du biogaz, la séparation effectuée est principalement une séparation CH4/CO2, devant permettre la production d'un gaz contenant en fonction de son utilisation plus de 85% de CH4, de préférence plus de 95% de CH4, plus préférentiellement plus de 97,5% de CH4, tout en minimisant les pertes de CH4 dans le gaz résiduaire et le coût d'épuration, ce dernier étant pour une part importante lié à la consommation électrique du dispositif de compression du gaz en amont des membranes.

Partant de là, un problème qui se pose est de fournir une installation améliorée de traitement par perméation membranaire d'un courant gazeux contenant au moins du méthane et du dioxyde de carbone.

Une solution de la présente invention est une installation pour le traitement par perméation membranaire d'un flux gazeux d'alimentation comprenant au moins du méthane et du dioxyde de carbone, ladite installation comprenant:
- une première unité de séparation par membrane M1 apte à recevoir le flux gazeux d'alimentation 1 et à fournir un premier perméat 2 et un premier rétentat 3,
- une seconde unité de séparation par membrane M2 apte à recevoir le premier rétentat 3 et à fournir un second perméat 4 et un second rétentat 5,
- une troisième unité de séparation par membrane M3 apte à recevoir le premier perméat 2 et à fournir un troisième perméat 6 et un troisième rétentat 7,
- au moins un premier moyen de mesure de la concentration en méthane dans le deuxième rétentat 5,
- au moins un premier moyen de comparaison de la concentration en méthane mesurée par le premier moyen de mesure avec une première valeur cible
- au moins un premier moyen de détermination d'une première valeur consigne 10 de la pression du flux gazeux d'alimentation en fonction du premier moyen de comparaison,
- au moins un premier moyen d'ajustement de la pression du flux gazeux d'alimentation mettant en œuvre un moyen d'ajustement 11 de la pression du deuxième rétentat,
- au moins un deuxième moyen de mesure de la concentration en méthane dans le troisième perméat 6,
- au moins un deuxième moyen de comparaison de la concentration en méthane mesurée par le deuxième moyen de mesure avec une deuxième valeur cible
- au moins un deuxième moyen de détermination d'une deuxième valeur consigne 8 de la pression du premier perméat en fonction du deuxième moyen de comparaison et
- au moins un deuxième moyen d'ajustement de la pression du premier perméat mettant en œuvre un moyen d'ajustement 9 de la pression du troisième rétentat ,
avec chaque unité de séparation par membrane comprenant au moins une membrane plus perméable au dioxyde de carbone qu'au méthane.

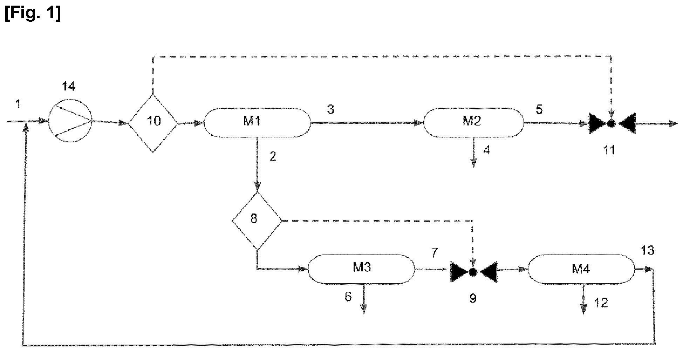

[Fig. 1] représente une installation selon l'invention.

Selon le cas, l'installation selon l'invention peut présenter une ou plusieurs des caractéristiques ci-dessous :
- l'installation comprend une quatrième unité de séparation par membrane M4 apte à recevoir le troisième rétentat 7 et à fournir un quatrième perméat 12 et un quatrième rétentat 13,
- le deuxième moyen de mesure est apte à mesurer la concentration en méthane dans le troisième perméat 6 et/ou dans le quatrième perméat 12,
- le moyen d'ajustement 11 de la pression du deuxième rétentat et le moyen d'ajustement 9 de la pression du troisième rétentat comprennent au moins une vanne.
- L'installation comprend un compresseur 14 permettant de comprimer le flux gazeux d'alimentation 1,
- Le troisième rétentat 7 et/ou le quatrième rétentat 13 sont recyclés dans le flux gazeux d'alimentation 1 en amont du compresseur 14 ou dans le compresseur 14,
- les membranes utilisées dans une même unité de séparation ont la même sélectivité.
- Au moins une unité de séparation par membrane utilise une membrane de sélectivité différente de la sélectivité des membranes des autres unités de séparation par membrane.

La présente invention a également pour objet un procédé de commande d'une installation telle que définie précédemment, comprenant les étapes suivantes :
- une première étape de mesure de la concentration en CH4 dans le deuxième rétentat 5,
- une première étape de comparaison de cette mesure avec une première valeur cible, et de détermination de l'écart par rapport à cette première valeur cible, et
- une première étape de détermination d'une première valeur consigne 10 de la pression du flux d'alimentation en fonction de l'écart par rapport à la première valeur cible, et
- une première étape d'ajustement de la pression du flux d'alimentation en fonction de la première valeur consigne par ouverture ou fermeture d'une vanne 11 sur le deuxième rétentat 5,
- une deuxième étape de mesure de la concentration en CH4 dans le troisième perméat 6,
- une deuxième étape de comparaison de cette mesure avec une deuxième valeur cible, et de détermination de l'écart par rapport à cette deuxième valeur cible,
- une deuxième étape de détermination d'une deuxième valeur consigne 8 de la pression du premier perméat 2 en fonction de l'écart par rapport à la deuxième valeur cible, et
- une deuxième étape d'ajustement de la pression du premier perméat 2 en fonction de la deuxième valeur consigne par ouverture ou fermeture d'une vanne 9 sur le troisième rétentat 7.

Selon le cas, le procédé selon l'invention peut présenter une ou plusieurs des caractéristiques ci-dessous :
- les vannes 9 et 11 sont des vannes de coupure et de mise en pression progressive.
- l'installation comprend une quatrième unité de séparation membranaire M4 apte à recevoir le troisième rétentat 7 et à fournir un quatrième perméat 12 et un quatrième rétentat 13 et ledit procédé comprend dans la deuxième étape une mesure de la concentration en CH4 dans le mélange du troisième perméat et du quatrième perméat,
- le flux gazeux d'alimentation est du biogaz,
- les étapes de comparaison, les étapes de détermination de valeurs consignes et les étapes d'ajustement sont réalisées manuellement,
- les étapes de comparaison, les étapes de détermination de valeurs consignes et les étapes d'ajustement sont réalisées automatiquement par des moyens de transmission de données et de traitement de données.

## Revendications

1. Installation pour le traitement par perméation membranaire d'un flux gazeux d'alimentation comprenant au moins du méthane et du dioxyde de carbone, ladite installation comprenant:
• une première unité de séparation par membrane (M1) apte à recevoir le flux gazeux d'alimentation (1) et à fournir un premier perméat (2) et un premier rétentat (3),
• une seconde unité de séparation par membrane (M2) apte à recevoir le premier rétentat (3) et à fournir un second perméat (4) et un second rétentat (5),
• une troisième unité de séparation par membrane (M3) apte à recevoir le premier perméat (2) et à fournir un troisième perméat (6) et un troisième rétentat (7),
• au moins un premier moyen de mesure de la concentration en méthane dans le deuxième rétentat (5),
• au moins un premier moyen de comparaison de la concentration en méthane mesurée par le premier moyen de mesure avec une première valeur cible
• au moins un premier moyen de détermination d'une première valeur consigne (10) de la pression du flux gazeux d'alimentation en fonction du premier moyen de comparaison,
• au moins un premier moyen d'ajustement de la pression du flux gazeux d'alimentation mettant en œuvre un moyen d'ajustement (11) de la pression du deuxième rétentat,
• au moins un deuxième moyen de mesure de la concentration en méthane dans le troisième perméat (6),
• au moins un deuxième moyen de comparaison de la concentration en méthane mesurée par le deuxième moyen de mesure avec une deuxième valeur cible
• au moins un deuxième moyen de détermination d'une deuxième valeur consigne (8) de la pression du premier perméat en fonction du deuxième moyen de comparaison et
• au moins un deuxième moyen d'ajustement de la pression du premier perméat mettant en œuvre un moyen d'ajustement (9) de la pression du troisième rétentat , avec chaque unité de séparation par membrane comprenant au moins une membrane plus perméable au dioxyde de carbone qu'au méthane.

2. Installation selon la revendication 1, **caractérisée en ce qu'**elle comprend une quatrième unité de séparation par membrane (M4) apte à recevoir le troisième rétentat (7) et à fournir un quatrième perméat (12) et un quatrième rétentat (13).

3. Installation selon la revendication 2, **caractérisée en ce que** le deuxième moyen de mesure est apte à mesurer la concentration en méthane dans le troisième perméat (6) et/ou dans le quatrième perméat (12).

4. Installation selon l'une des revendications 1 à 3, **caractérisée en ce que** le moyen d'ajustement (11) de la pression du deuxième rétentat et le moyen d'ajustement (9) de la pression du troisième rétentat comprennent au moins une vanne.

5. Installation selon l'une des revendications 1 à 4, **caractérisée en ce qu'**elle comprend un compresseur (14) permettant de comprimer le flux gazeux d'alimentation (1).

6. Installation selon la revendication 5, **caractérisée en ce que** le troisième rétentat (7) et/ou le quatrième rétentat (13) sont recyclés dans le flux gazeux d'alimentation (1) en amont du compresseur (14) ou dans le compresseur (14).

7. Installation selon l'une des revendications 1 à 6, **caractérisée en ce que** les membranes utilisées dans une même unité de séparation ont la même sélectivité.

8. Installation selon l'un des revendications 1 à 6, **caractérisée en ce qu'**au moins une unité de séparation par membrane utilise une membrane de sélectivité différente de la sélectivité des membranes des autres unités de séparation par membrane.

9. Procédé de commande d'une installation telle que définie dans l'une des revendications 1 à 8, comprenant les étapes suivantes :
• une première étape de mesure de la concentration en CH4 dans le deuxième rétentat (5),
• une première étape de comparaison de cette mesure avec une première valeur cible, et de détermination de l'écart par rapport à cette première valeur cible, et
• une première étape de détermination d'une première valeur consigne (10) de la pression du flux d'alimentation en fonction de l'écart par rapport à la première valeur cible,
• une première étape d'ajustement de la pression du flux d'alimentation en fonction de la première valeur consigne par ouverture ou fermeture d'une vanne (11) sur le deuxième rétentat (5).
• une deuxième étape de mesure de la concentration en CH4 dans le troisième perméat (6),
• une deuxième étape de comparaison de cette mesure avec une deuxième valeur cible, et de détermination de l'écart par rapport à cette deuxième valeur cible,
• une deuxième étape de détermination d'une deuxième valeur consigne (8) de la pression du premier perméat (2) en fonction de l'écart par rapport à la deuxième valeur cible, et
• une deuxième étape d'ajustement de la pression du premier perméat (2) en fonction de la deuxième valeur consigne par ouverture ou fermeture d'une vanne (9) sur le troisième rétentat (7).

10. Procédé de commande selon la revendication 9, **caractérisé en ce que** les vannes (9) et (11) sont des vannes de coupure et de mise en pression progressive.

11. Procédé de commande selon l'une des revendications 9 ou 10, **caractérisé en ce que** l'installation comprend une quatrième unité de séparation membranaire (M4) apte à recevoir le troisième rétentat (7) et à fournir un quatrième perméat (12) et un quatrième rétentat (13) et ledit procédé comprend dans la deuxième étape une mesure de la concentration en CH4 dans le mélange du troisième perméat et du quatrième perméat.

12. Procédé de commande selon l'une des revendications 9 à 11, **caractérisé en ce que** le flux gazeux d'alimentation est du biogaz.

13. Procédé de commande selon l'une des revendications 9 à 12, **caractérisé en ce que** les étapes de comparaison, les étapes de détermination de valeurs consignes et les étapes d'ajustement sont réalisées manuellement.

14. Procédé selon l'une des revendications 9 à 13, **caractérisé en ce que** les étapes de comparaison, les étapes de détermination de valeurs consignes et les étapes d'ajustement sont réalisées automatiquement par des moyens de transmission de données et de traitement de données.
